(19) Europäisches Patentamt
European Patent Office
Office européen des brevets

(11) **EP 4 598 260 A1**

(12) **EUROPEAN PATENT APPLICATION**
published in accordance with Art. 153(4) EPC

(43) Date of publication:
06.08.2025 Bulletin 2025/32

(21) Application number: 23872926.3

(22) Date of filing: 20.09.2023

(51) International Patent Classification (IPC):
$H04W\ 76/28^{(2018.01)}$   $H04W\ 52/02^{(2009.01)}$
$H04W\ 72/23^{(2023.01)}$   $H04J\ 11/00^{(2006.01)}$
$H04W\ 72/04^{(2023.01)}$

(52) Cooperative Patent Classification (CPC):
H04J 11/00; H04W 52/02; H04W 72/04;
H04W 72/23; H04W 76/28

(86) International application number:
PCT/KR2023/014238

(87) International publication number:
WO 2024/071808 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022 US 202263411627 P

(71) Applicant: LG Electronics Inc.
Yeongdeungpo-gu
Seoul 07336 (KR)

(72) Inventors:
• HWANG, Seunggye
  Seoul 06772 (KR)
• KIM, Jaehyung
  Seoul 06772 (KR)
• LEE, Youngdae
  Seoul 06772 (KR)
• YANG, Suckchel
  Seoul 06772 (KR)
• BAE, Duckhyun
  Seoul 06772 (KR)

(74) Representative: Frenkel, Matthias Alexander
Wuesthoff & Wuesthoff
Patentanwälte und Rechtsanwalt PartG mbB
Schweigerstraße 2
81541 München (DE)

(54) **METHOD AND DEVICE FOR TRANSMITTING AND RECEIVING WIRELESS SIGNAL IN WIRELESS COMMUNICATION SYSTEM**

(57) A method for receiving a signal by a terminal (UE) in a wireless communication system according to an example of the present disclosure may comprise: receiving at least one discontinuous reception (DRX) configuration from a network; and performing physical downlink control channel (PDCCH) monitoring on the basis of a plurality of DRX active time intervals related to the at least one DRX configuration, wherein the plurality of DRX active time intervals include at least one first type DRX active time interval and at least one second type DRX active time interval, the PDCCH monitoring includes (i) first PDCCH monitoring performed on the basis of a first PDCCH monitoring-related configuration in the at least one first type DRX active time interval and (ii) second PDCCH monitoring performed on the basis of a second PDCCH monitoring-related configuration in the at least one second type DRX active time interval, and the first PDCCH monitoring-related configuration and the second PDCCH monitoring-related configuration are at least partially different.

**FIG. 14**

**Description**

**TECHNICAL FIELD**

The present disclosure relates to a wireless communication system, and more particularly, to a method and apparatus for transmitting and receiving a wireless signal.

**BACKGROUND**

Generally, a wireless communication system is developing to diversely cover a wide range to provide such a communication service as an audio communication service, a data communication service, and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

**DISCLOSURE**

**TECHNICAL PROBLEM**

The present disclosure aims to provide a method and device for efficiently performing a wireless signal transmission and reception process.

Other objects may be derived from the embodiments disclosed in the detailed description.

**TECHNICAL SOLUTION**

In an aspect of the present disclosure, provided herein is a method of receiving a signal by a user equipment (UE) in a wireless communication system. The method may include: receiving at least one discontinuous reception (DRX) configuration from a network; and performing physical downlink control channel (PDCCH) monitoring based on a plurality of DRX active time durations related to the at least one DRX configuration. The plurality of DRX active time durations comprise at least one first type DRX active time duration and at least one second type DRX active time duration. The PDCCH monitoring may include: (i) first PDCCH monitoring performed based on a first PDCCH monitoring-related configuration during the at least one first type DRX active time duration; and (ii) second PDCCH monitoring performed based on a second PDCCH monitoring-related configuration during the at least one second type DRX active time duration. The first PDCCH monitoring-related configuration and the second PDCCH monitoring-related configuration may be at least partially different.

The first PDCCH monitoring-related configuration may be associated with a first search space set (SSS), and the second PDCCH monitoring-related configuration may be associated with a second SSS.

The first SSS and the second SSS may belong to different search space set groups (SSSGs).

At least one of a downlink control information (DCI) format configuration and a radio network temporary identifier (RNTI) configuration may be different between the first PDCCH monitoring-related configuration and the second PDCCH monitoring-related configuration.

A PDCCH skipping operation for omitting monitoring of at least a part of PDCCH candidates related to the PDCCH monitoring may be configured differently between the first PDCCH monitoring-related configuration and the second PDCCH monitoring-related configuration.

The at least one first type DRX active time duration may be configured based on a first periodicity, and the at least one second type DRX active time duration may be configured based on a second periodicity.

During a time duration in which the at least one first type DRX active time duration and the at least one second type DRX active time duration overlap, the first PDCCH monitoring may be performed based on the first PDCCH monitoring-related configuration.

The at least one first type DRX active time duration and the at least one second type DRX active time duration may be configured based on a single DRX configuration.

The single DRX configuration may include information regarding a pattern of the at least one first type DRX active time duration and the at least one second type DRX active time duration in a time domain.

In another aspect of the present disclosure, provided herein is a computer-readable recording medium having recorded thereon a program for the above-described signal reception method.

In another aspect of the present disclosure, provided herein is a UE configured to perform the above-described signal reception method.

In another aspect of the present disclosure, provided herein is a device configured to control the UE performing the above-described signal reception method.

In another aspect of the present disclosure, provided herein is a method of transmitting a signal by a base station (BS) in a wireless communication system. The method may include: transmitting at least one DRX configuration to a UE; and performing PDCCH transmission to the UE based on a plurality of DRX active time durations related to the at least one DRX configuration. The plurality of DRX active time durations may include at least one first type DRX active time duration and at least one second type DRX active time duration. The PDCCH transmission may include: (i) first PDCCH transmission performed based on a first PDCCH monitoring-related configuration of the UE during the at least one first type DRX active time duration; and (ii) second PDCCH transmission performed based on a second PDCCH monitoring-related configuration during the at least one second type DRX active time duration. The first PDCCH monitoring-related configuration and the second PDCCH monitoring-related configuration may be at least partially different.

In a further aspect of the present disclosure, provided herein is a BS configured to perform the above-described signal transmission method.

## ADVANTAGEOUS EFFECTS

According to an embodiment, signals may be transmitted and received more accurately and efficiently in a wireless communication system.

Other effects may be derived from the embodiments disclosed in the detailed description.

## BRIEF DESCRIPTION OF THE DRAWINGS

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary physical downlink control channel (PDCCH) transmission and reception process.

FIG. 6 illustrates an exemplary physical downlink shared channel (PDSCH) reception and acknowledgement/negative acknowledgement (ACK/NACK) transmission process.

FIG. 7 illustrates an exemplary physical uplink shared channel (PUSCH) transmission process.

FIGS. 8 to 10 are diagrams illustrating DRX-related operations.

FIG. 11 is a diagram for explaining each active time duration in an M-state active time structure.

FIG. 12 is a diagram for explaining the configuration of an M-state active time in a single DRX configuration.

FIG. 13 is a diagram for explaining the configuration of an M-state active time in an M-state DRX configuration.

FIG. 14 is a diagram for explaining signal reception by a user equipment (UE) according to an embodiment.

FIG. 15 is a diagram for explaining signal transmission by a base station (BS) according to an embodiment.

FIG. 16 to FIG. 19 illustrate an example of a communication system 1 and wireless devices applicable to the present disclosure.

## DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In an embodiment of the present disclosure, for simplicity, this technology will be referred to as NR (New Radio or New RAT).

For the sake of clarity, 3GPP NR is mainly described, but the technical idea of the present disclosure is not limited thereto.

For the background art relevant to the present disclosure, the definitions of terms, and abbreviations, the following documents may be incorporated by reference.

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.304: User Equipment (UE) procedures in idle mode and in RRC Inactive state
- 38.321 Medium Access Control (MAC) protocol specification
- 38.331: Radio Resource Control (RRC) protocol specification
- 37.213: Introduction of channel access procedures to unlicensed spectrum for NR-based access

Terms and Abbreviations

- SS: Search Space
- CSS: Common Search Space
- USS: UE-specific Search Space
- PDCCH: Physical Downlink Control Channel
- PDSCH: Physical Downlink Shared Channel;
- PUCCH: Physical Uplink Control Channel;
- PUSCH: Physical Uplink Shared Channel;
- DCI: Downlink Control Information
- UCI: Uplink Control Information
- SI: System Information
- SIB: System Information Block
- MIB: Master Information Block
- RRC: Radio Resource Control
- DRX: Discontinuous Reception
- RNTI: Radio Network Temporary Identifier
- CSI: Channel state information
- PCell: Primary Cell
- SCell: Secondary Cell
- PSCell: Primary SCG(Secondary Cell Group) Cell
- CA: Carrier Aggregation
- WUS: Wake up Signal

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

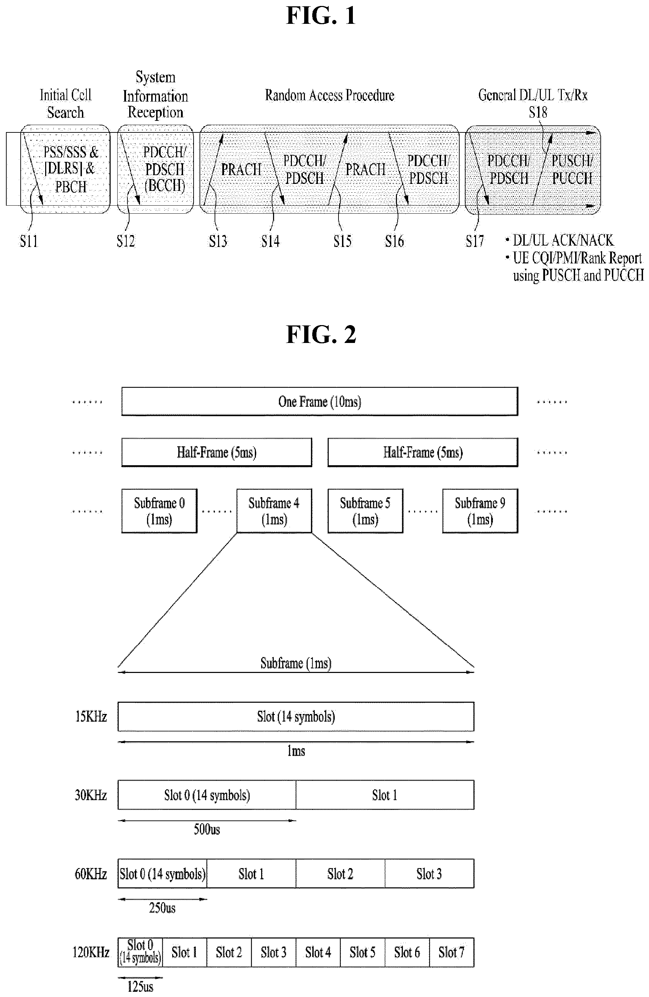

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: Number of symbols in a slot<br>'* $N^{frame,u}_{slot}$: Number of slots in a frame<br>* $N^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

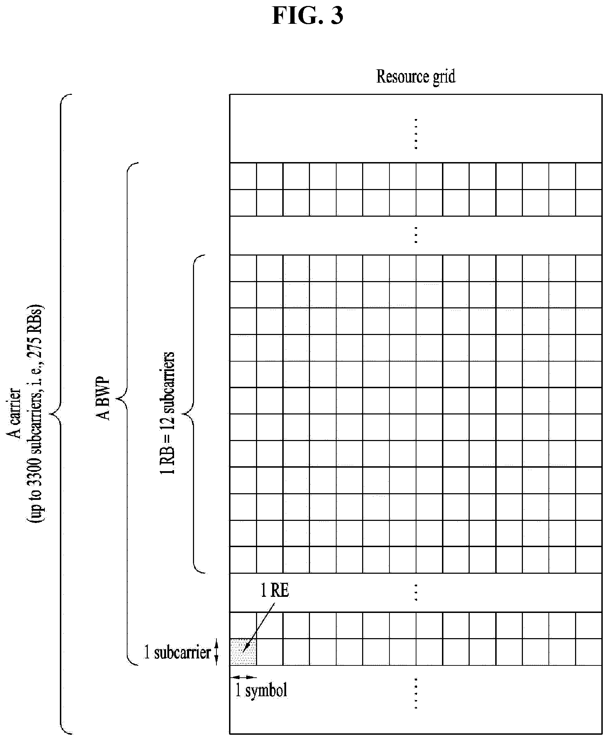

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

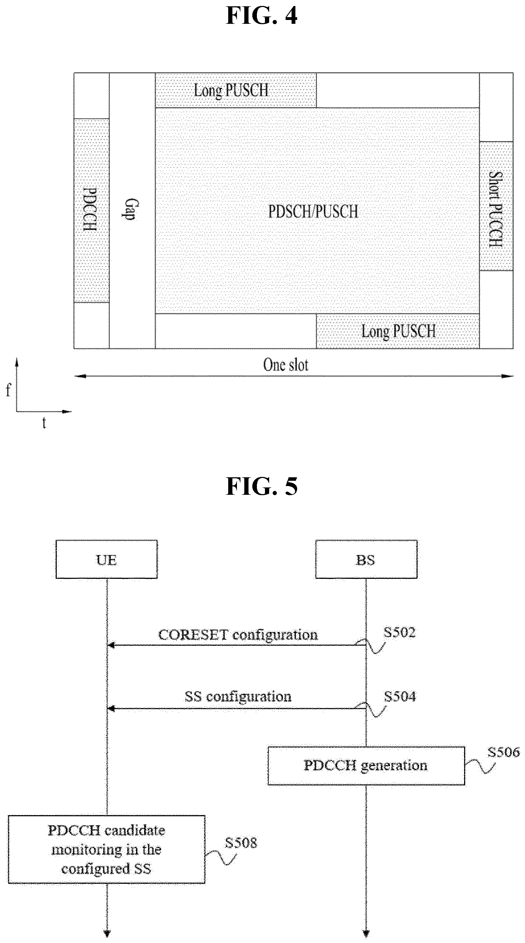

FIG. 4 illustrates an example of mapping physical channels in a slot. In an NR system, a frame is characterized by a self-contained structure in which all of a DL control channel, DL or UL data, and a UL channel may be included in one slot. For example, the first N symbols of a slot may be used to carry a DL channel (e.g., PDCCH) (hereinafter, referred to as a DL control region), and the last M symbols of the slot may be used to carry a UL channel (e.g., PUCCH) (hereinafter, referred to as a UL control region). Each of N and M is an integer equal to or larger than 0. A resource area (hereinafter, referred to as a data region) between the DL control region and the UL control region may be used to transmit DL data (e.g., PDSCH) or UL data (e.g., PUSCH). A guard period (GP) provides a time gap for switching from a transmission mode to a reception mode or from the reception mode to the transmission mode. Some symbols at a DL-to-UL switching time in a subframe may be configured as a GP.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

FIG. 5 illustrates an exemplary PDCCH transmission/reception process.

Referring to FIG. 5, a BS may transmit a control resource set (CORESET) configuration to a UE (S502). A CORESET is defined as a resource element group (REG) set having a given numerology (e.g., a subcarrier spacing (SCS), a cyclic prefix (CP) length, and so on). An REG is defined as one OFDM symbol by one (physical) resource block (P)RB. A plurality of CORESETs for one UE may overlap with each other in the time/frequency domain. A CORESET may be configured by system information (e.g., a master information block (MIB)) or higher-layer signaling (e.g., radio resource control (RRC) signaling). For example, configuration information about a specific common CORESET (e.g., CORESET #0) may be transmitted in the MIB. For example, a PDSCH carrying system information block 1 (SIB1) may be scheduled by a specific PDCCH, and CORESET #0 may be used to transmit the specific PDCCH. Further, configuration information about CORESET #N (e.g., N>0) may be transmitted by RRC signaling (e.g., cell-common RRC signaling, UE-specific RRC signaling, or the like). For example, the UE-specific RRC signaling carrying CORESET configuration information may include, but not limited to, various types of signaling such as an RRC setup message, an RRC reconfiguration message, and/or BWP configuration information. Specifically, a CORESET configuration may include the following information/-fields.

- controlResourceSetId: Indicates the ID of a CORESET.
- frequencyDomainResources: Indicates the frequency-domain resources of the CORESET. The resources are indicated by a bitmap in which each bit corresponds to an RB group (= 6 (consecutive) RBs). For example, the most significant bit (MSB) of the bitmap corresponds to a first RB group in a BWP. An RB group corresponding to a bit having a bit value of 1 is allocated as frequency-domain resources of the CORESET.
- duration: Indicates the time-domain resources of the CORESET. It indicates the number of consecutive OFDM symbols included in the CORESET. The duration has a value between 1 and 3.
- cce-REG-MappingType: Indicates a control channel element (CCE)-to-REG mapping type. An interleaved type and a non-interleaved type are supported.
- interleaverSize: Indicates an interleaver size.
- pdcch-DMRS-ScramblingID: Indicates a value used for PDCCH DMRS initialization. When pdcch-DMRS-ScramblingID is not included, the physical cell ID of a serving cell is used.
- precoderGranularity: Indicates a precoder granularity in the frequency domain.
- reg-BundleSize: Indicates an REG bundle size.
- tci-PresentInDCI: Indicates whether a transmission configuration index (TCI) field is included in DL-related DCI.
- tci-StatesPDCCH-ToAddList: Indicates a subset of TCI states configured in pdcch-Config, used for providing quasi-co-location (QCL) relationships between DL RS(s) in an RS set (TCI-State) and PDCCH DMRS ports.

Further, the BS may transmit a PDCCH search space (SS) configuration to the UE (S504). The PDCCH SS configuration may be transmitted by higher-layer signaling (e.g., RRC signaling). For example, the RRC signaling may include, but not limited to, various types of signaling such as an RRC setup message, an RRC reconfiguration message, and/or BWP configuration information. While a CORESET configuration and a PDCCH SS configuration are shown as separately signaled in FIG. 5, for convenience of description, the present disclosure is not limited thereto. For example, the CORESET configuration and the PDCCH SS configuration may be transmitted in one message (e.g., by one RRC signaling) or separately in different messages.

The PDCCH SS configuration may include information about the configuration of a PDCCH SS set. The PDCCH SS set may be defined as a set of PDCCH candidates monitored (e.g., blind-detected) by the UE. One or more SS sets may be configured for the UE. Each SS set may be a UE-specific search space (USS) set or a common search space (CSS) set. For convenience, PDCCH SS set may be referred to as "SS" or "PDCCH SS."

A PDCCH SS set includes PDCCH candidates. A PDCCH candidate is CCE(s) that the UE monitors to receive/detect a PDCCH. The monitoring includes blind decoding (BD) of PDCCH candidates. One PDCCH (candidate) includes 1, 2, 4, 8, or 16 CCEs according to an aggregation level (AL). One CCE includes 6 REGs. Each CORESET configuration is associated with one or more SSs, and each SS is associated with one CORESET configuration. One SS is defined based on one SS configuration, and the SS configuration may include the following information/fields.

- searchSpaceId: Indicates the ID of an SS.
- controlResourceSetId: Indicates a CORESET associated with the SS.
- monitoringSlotPeriodicityAndOffset: Indicates a periodicity (in slots) and offset (in slots) for PDCCH monitoring.
- monitoringSymbolsWithinSlot: Indicates the first OFDM symbol(s) for PDCCH monitoring in a slot configured with PDCCH monitoring. The first OFDM symbol(s) for PDCCH monitoring is indicated by a bitmap with each bit corresponding to an OFDM symbol in the slot. The MSB of the bitmap corresponds to the first OFDM symbol of the slot. OFDM symbol(s) corresponding to bit(s) set to 1 corresponds to the first symbol(s) of a CORESET in the slot.
- nrofCandidates: Indicates the number of PDCCH candidates (one of values 0, 1, 2, 3, 4, 5, 6, and 8) for each AL where AL={1, 2, 4, 8, 16}.
- searchSpaceType: Indicates CSS or USS as well as a DCI format used in the corresponding SS type.

Subsequently, the BS may generate a PDCCH and transmit the PDCCH to the UE (S506), and the UE may monitor PDCCH candidates in one or more SSs to receive/detect the PDCCH (S508). An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

A CCE-to-REG mapping type is configured as one of an interleaved CCE-to-REG type and a non-interleaved CCE-to-REG type.

- Non-interleaved CCE-to-REG mapping (or localized CCE-to-REG mapping) (FIG. 5): 6 REGs for a given CCE are grouped into one REG bundle, and all of the REGs for the given CCE are contiguous. One REG bundle corresponds to one CCE.
- Interleaved CCE-to-REG mapping (or distributed CCE-to-REG mapping): 2, 3 or 6 REGs for a given CCE are grouped into one REG bundle, and the REG bundle is interleaved within a CORESET. In a CORESET including one or two OFDM symbols, an REG bundle includes 2 or 6 REGs, and in a CORESET including three OFDM symbols, an REG bundle includes 3 or 6 REGs. An REG bundle size is set on a CORESET basis.

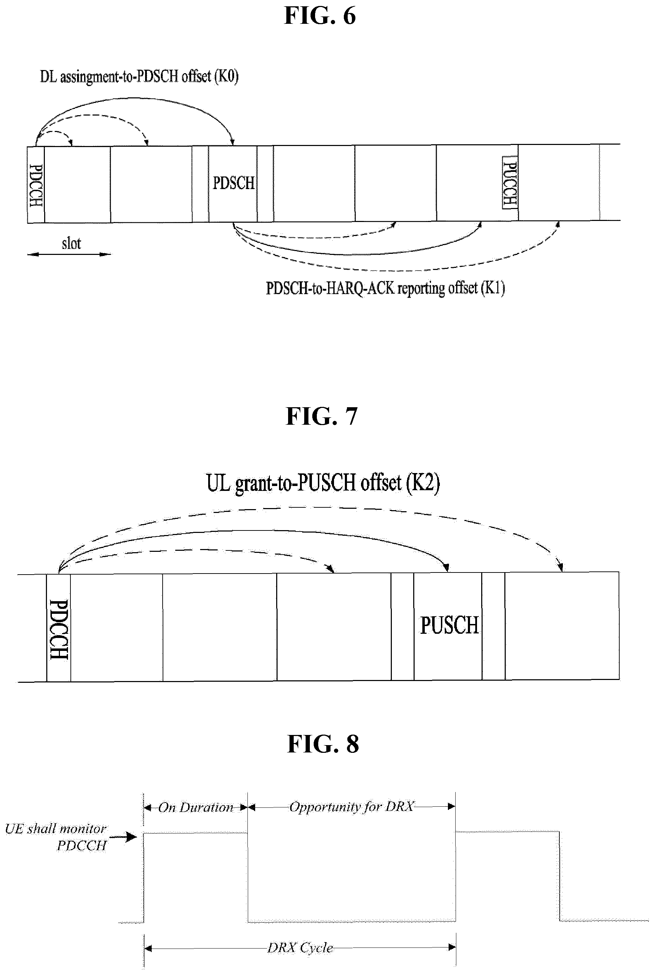

FIG. 6 illustrates an exemplary PDSCH reception and ACK/NACK transmission process. Referring to FIG. 6, the UE may detect a PDCCH in slot #n. The PDCCH includes DL scheduling information (e.g., DCI format 1_0 or DCI format 1_1), and indicates a DL assignment-to-PDSCH offset, K0 and a PDSCH-HARQ-ACK reporting offset, K1. For example, DCI format 1_0 or DCI format 1_1 may include the following information.

- Frequency domain resource assignment: Indicates an RB set allocated to a PDSCH.
- Time domain resource assignment: Indicates K0 (e.g., slot offset), the starting position (e.g., OFDM symbol index) of the PDSCH in slot #n+K0, and the duration (e.g., the number of OFDM symbols) of the PDSCH. As described above, a row index of pdsch-TimeDomainAllocationList provided UE-commonly or UE-specifically may be indicated by a TDRA field.
- PDSCH-to-HARQ_feedback timing indicator: Indicates K1.
- HARQ process number (4 bits): Indicates the HARQ process ID of data (e.g., a PDSCH or TB).
- PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in 2 bits if spatial bundling is not configured and in 1 bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the B S/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

FIG. 7 illustrates an exemplary PUSCH transmission procedure. Referring to FIG. 7, the UE may detect a PDCCH in slot #n. The PDCCH includes DL scheduling information (e.g., DCI format 1_0 or 1_1). DCI format 1_0 or 1_1 may include the following information.

- Frequency domain resource assignment: Indicates an RB set assigned to the PUSCH.
- Time domain resource assignment: Indicates a slot offset K2 and the starting position (e.g. OFDM symbol index) and duration (e.g. the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

## Paging

The network may (i) access to UEs in RRC_IDLE, RRC_INACTIVE, and RRC_CONNECTED states by paging messages, and (ii) indicate a system information change and an earthquake and tsunami warning system/commercial mobile alert system (ETWS/CMAS) notification to UEs in the RRC_IDLE and RRC_INACTIVE states and UEs in the RRC_CONNECTED state by short messages. Both a paging message and a short message are transmitted based on a P-RNTI-based PDCCH. The paging message is transmitted on a logical channel, paging control channel (PCCH), whereas the short message is directly transmitted on a physical channel, PDCCH. Because the logical channel, PCCH is mapped to a physical channel, PDSCH, the paging message may be understood as scheduled based on a P-RNTI-based PDCCH.

While the UE stays in the RRC_IDLE state, the UE monitors a paging channel for core network (CN)-initiated paging. In the RRC _INACTIVE state, the UE also monitors the paging channel, for radio access network (RAN)-initiated paging. The UE does not need to monitor the paging channel continuously. Paging discontinuous reception (DRX) is defined as monitoring a paging channel only during one paging occasion (PO) per DRX cycle by a UE in the RRC_IDLE or RRC _INACTIVE state. A paging DRX cycle is configured by the network, as follows.

1) In the case of CN-initiated paging, a default cycle is broadcast in system information.

2) In the case of CN-initiated paging, a UE-specific cycle is configured by NAS signaling.

3) In the case of RAN-initiated signaling, a UE-specific cycle is configured by RRC signaling.

Because all of POs of the UE for CN-initiated signaling and RAN-initiated signaling are based on the same UE ID, the two POs overlap with each other. The number of POs in a DRX cycle may be set by system information, and the network may distribute UEs to the POs based on IDs.

When the UE is in the RRC_CONNECTED state, the UE monitors a paging channel in each paging occasion (PO) signaled by system information, for an SI change indication and a PWS notification. In bandwidth adaptation (BA), the RRC_CONNECTED UE monitors only a paging channel in an active BWP in which a configured CSS is located.

In shared spectrum channel access, additional PDCCH monitoring occasions may be configured in a PO of the UE, for paging monitoring. However, when the UE detects a P-RNTI-based PDCCH transmission in its PO, the UE does not need to monitor subsequent PDCCH monitoring occasions in the PO.

To reduce power consumption, the UE may use DRX in the RRC_IDLE and RRC_INACTIVE states. The UE monitors one PO per DRX cycle. A PO is a set of PDCCH monitoring occasions, and may include multiple time slots (e.g., subframes or OFDM symbols) in which paging DCI may be transmitted. One paging frame (PF) is one radio frame and may include one or more POs or the starting points of one or more POs.

In a multi-beam operation, the UE assumes that the same paging message and the same short message are repeated in all transmission beams. The paging message is the same for both of RAN-initiated paging and CN-initiated paging.

Upon receipt of RAN-initiated paging, the UE initiates an RRC connection resume procedure. Upon receipt of CN-initiated paging in the RRC_INACTIVE state, the UE transitions to the RRC_IDL state and notifies the NAS of the CN-initiated paging.

A PF and a PO for paging are determined in the following manner:

- An SFN for the PF is determined by:

$$(\text{SFN} + \text{PF\_offset}) \bmod T = (T \operatorname{div} N)*(\text{UE\_ID} \bmod N)$$

- An index i_s indicating the index of the PO is determined by:

$$i\_s = \text{floor}(\text{UE\_ID}/N) \bmod Ns$$

The following parameters may be used to calculate the PF and i_s above.

- T: The DRX cycle of the UE (T is determined by the smallest of UE-specific DRX values (if configured by RRC and/or an upper layer) and a default DRX value broadcast in system information. In the RRC_IDLE state, if UE-specific DRX is not configured by an upper layer, the default value is applied).
- N: Number of total paging frames in T
- Ns: Number of POs for a PF
- PF_offset: Offset used for PF determination
- UE_ID: 5G-S-TMSI mod 1024

DRX (Discontinuous Reception)

(1) RRC_CONNECTED DRX

FIG. 8 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC_INACTIVE state, and an RRC_CONNECTED state. The UE performs DRX to receive a paging signal discontinuously in the RRC_IDLE state and the RRC_INACTIVE state. DRX in the RRC_CONNECTED state (RRC_CONNECTED DRX) will be described below.

Referring to FIG. 8, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration.

When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in an embodiment of the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in an embodiment of the present disclosure. Irrespective of whether DRX is configured, PDCCH monitoring may be restricted during a time period configured as a measurement gap.

Table 5 describes a DRX operation of a UE (in the RRC_CONNECTED state). Referring to Table 5, DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

[Table 5]

|  | Type of signals | UE procedure |
|---|---|---|
| 1st step | RRC signalling (MAC-Cell GroupConfig) | - Receive DRX configuration information |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following information in defining DRX. - Value of drx-OnDurationTimer: defines the duration of the starting period of the DRX cycle.

- Value of drx-InactivityTimer: defines the duration of a time period during which the UE is awake after a PDCCH occasion in which a PDCCH indicating initial UL or DL data has been detected
- Value of drx-HARQ-RTT-TimerDL: defines the duration of a maximum time period until a DL retransmission is received after reception of a DL initial transmission.
- Value of drx-HARQ-RTT-TimerDL: defines the duration of a maximum time period until a grant for a UL retransmission is received after reception of a grant for a UL initial transmission.
- drx-LongCycleStartOffset: defines the duration and starting time of a DRX cycle.
- drx-ShortCycle (optional): defines the duration of a short DRX cycle.

When any of drx-OnDurationTimer, drx-InactivityTimer, drx-HARQ-RTT-TimerDL, and drx-HARQ-RTT-TimerDL is running, the UE performs PDCCH monitoring in each PDCCH occasion, staying in the awake state.

RRC_IDLE DRX

In the RRC_IDLE and RRC_INACTIVE states, DRX is used to receive a paging signal discontinuously. For simplicity, DRX performed in the RRC_IDLE (or RRC_INACTIVE) state will be referred to as RRC_IDLE DRX.

Therefore, if DRX is configured, PDCCH monitoring/reception may be performed discontinuously in the time domain in performing the above-described/proposed procedures and/or methods are performed.

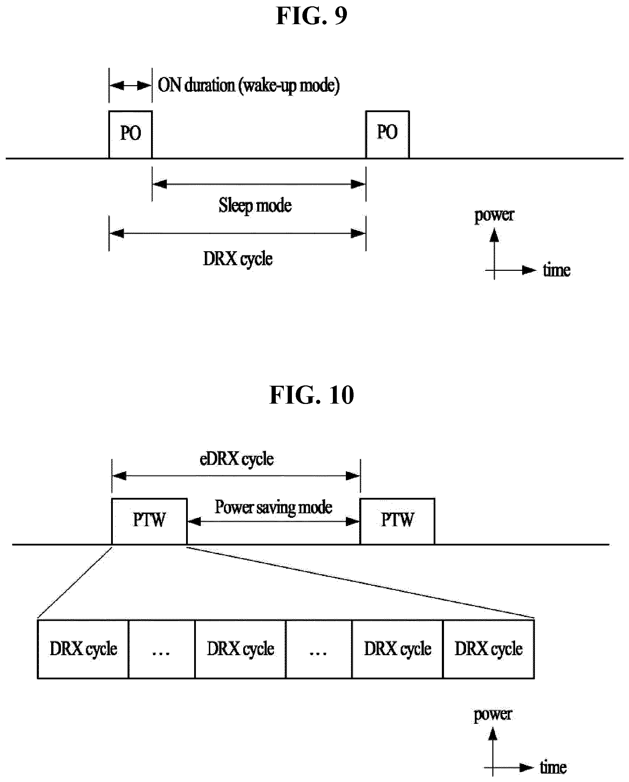

FIG. 9 illustrates an exemplary DRX cycle for paging.

Referring to FIG. 9, DRX may be configured for discontinuous reception of a paging signal. The UE may receive DRX configuration information from the BS by higher-layer (e.g., RRC) signaling. The DRX configuration information may include configuration information related to a DRX cycle, a DRX offset, a DRX timer, and the like. The UE repeats an On duration and a Sleep duration according to the DRX cycle. The UE may operate in a wakeup mode during the On duration and in a sleep mode during the Sleep duration.

In the wakeup mode, the UE may monitor a PO to receive a paging message. A PO means a time resource/interval (e.g., subframe or slot) in which the UE expects to receive a paging message. PO monitoring includes monitoring a PDCCH (MPDCCH or NPDCCH) scrambled with a P-RNTI (hereinafter, referred to as a paging PDCCH) on a PO. The paging message may be included in the paging PDCCH or in a PDSCH scheduled by the paging PDCCH. One or more POs may be included in a paging frame (PF), and the PF may be periodically configured based on a UE ID. A PF may correspond to one radio frame, and the UE ID may be determined based on the International Mobile Subscriber Identity (IMSI) of the UE. When DRX is configured, the UE monitors only one PO per DRX cycle. When the UE receives a paging message indicating a change of its ID and/or system information on a PO, the UE may perform an RACH procedure to initialize (or reconfigure) a connection with the BS, or receive (or obtain) new system information from the BS. Therefore, PO monitoring may be performed discontinuously in the time domain to perform an RACH procedure for connection to the BS or to receive (or obtain) new system information from the BS in the above-described procedures and/or methods.

FIG. 10 illustrates an extended DRX (eDRX) cycle.

According to the DRX cycle configuration, the maximum cycle duration may be limited to 2.56 seconds. However, in the case of a UE that intermittently performs data transmission/reception, such as an MTC UE or an NB-IoT UE, unnecessary power consumption may occur during the DRX cycle. In order to further reduce the power consumption of the UE, a method of significantly extending the DRX cycle based on a power saving mode (PSM) and a paging time window or paging transmission window (PTW) has been introduced. The extended DRX cycle is simply referred to as an eDRX cycle. Specifically, paging hyper-frames (PHs) are periodically configured based on the UE ID, and a PTW is defined in the PHs. The UE may perform a DRX cycle in the PTW duration to switch to the wakeup mode on the PO thereof to monitor the paging signal. One or more DRX cycles (e.g., wake-up mode and sleep mode) of FIG. 9 may be included in the PTW duration. The number of DRX cycles in the PTW duration may be set by the BS through a higher layer (e.g., RRC) signal.

## Multi-state active time in C-DRX

In NR, the DRX operation may be used to reduce unnecessary power consumption of the UE. Two DRX structures are defined: a DRX structure for UEs in the RRC_IDLE state and a DRX structure for UEs in the RRC_CONNECTED state. The two DRX structures are designed such that a duration in which the UE expects to receive a DL signal is periodically generated, thereby reducing unnecessary power consumption in other durations. In particular, for C-DRX (e.g., DRX applied to the UE in the RRC_CONNECTED state), the start position of an on-duration is periodically generated according to NR Rel-16 standards. The size of a configurable periodicity (i.e., DRX cycle) may be determined through higher layer parameters provided by the BS to the UE.

When the UE is configured with a C-DRX operation, it is defined to perform key operations, including PDSCH/PUSCH scheduling, during an active time. The method for determining the active time may include a duration during which the on-duration timer starts and is maintained, as well as a duration during which the inactivity timer starts and is maintained. The values of these two timers may be configured based on a DRX group, and according to the 3GPP NR Rel-17 standards, up to two DRX groups may be configured. In the current standard, UE belonging to the same DRX group are defined to share the active time duration. Even for different DRX groups, the UE operations within the active time follow a single set of rules.

In 3GPP, various scenarios and candidate technologies are being discussed to support XR services. XR generally requires a high data rate while satisfying low latency, and at the same time, due to the expected high power consumption of the UE, various power-saving techniques are being considered to improve battery efficiency. To prevent unnecessary power consumption of the UE, it is also possible to consider situations where the DRX operation is applied to XR UEs. However, the DRX operation defined in NR may not be suitable for some traffic characteristics of XR. For example, in XR, traffic with different characteristics may be transmitted and received in consideration of various service requirements. For instance, video and audio information, which may need to be transmitted and received for XR services, may have different data sizes and periodicities (required for transmission and reception). Therefore, when traffic with different characteristics is transmitted and received under a single DRX operation configuration and a single active time configuration, the following issues may arise. A short DRX cycle may be required, which leads to an increase in power consumption due to frequent PDCCH monitoring by the UE. Additionally, for some traffic, it may be difficult to distinguish and control whether transmission and reception are needed, which may lead to a decrease in radio resource and power efficiency.

To address such issues, proposed is a structure where multiple active times, which are capable of being distinguished into several states, are configured. In addition, methods for operating the BS and UE considering this structure are also proposed. Additionally, methods for configuring operations for each active time to configure active times in different states as well as methods for considering and supporting such structures are proposed. In particular, the methods proposed in the present disclosure may support the operations of the BS and UE that matches the characteristics of each data flow while ensuring power consumption efficiency in environments with multiple types of data flows (e.g., XR services), which are difficult to support using the existing DRX cycles in Rel-15/16/17 NR.

The methods proposed in the present disclosure are described mainly in the context of situations where the C-DRX operation is applied to the UE in the RRC_CONNECTED state in the 3GPP NR system. However, the methods proposed in the present disclosure are not limited thereto and may be extended to other methods where certain durations during which the UE does not expect to receive DL signals may be defined periodically (e.g., DRX applied to the UE in the RRC_IDLE state), which may be understood by those skilled in the art. Therefore, the methods proposed in the present disclosure may be applied to all types of transmission and reception methods expected by the BS and UE, as long as the principles of the present disclosure are not violated, even without separate explanations. For convenience of explanation, the term DRX is used as a general concept that includes the term C-DRX.

The DRX operation described below is mainly explained based on a structure where the DRX cycle is configured and the start of the active time (i.e., the start position of the on-duration timer) occurs periodically. However, the proposed methods are not limited thereto and may also be applied to DRX operations with non-periodic structures, which may be understood by those skilled in the art. For example, even when a DRX operation with a non-integer periodicity or a DRX operation where the size of the DRX cycle is expressed in the form of a pattern is used, the principles of the present disclosure may still be maintained and applied.

In the present disclosure, examples are shown based on the NR system to explain the principles of the present disclosure. However, the proposed methods are not limited to NR transmission and reception forms unless specifically stated otherwise. Furthermore, the present disclosure uses examples based on the characteristics and structure of XR services to explain the principles. However, the proposed methods are not limited to supporting XR services unless specifically stated otherwise. Therefore, the methods proposed in the present disclosure may be applied to all wireless communication transmission and reception structures and services, as long as the principles of the present disclosure are not violated, even without separate explanations.

For the methods proposed in the present disclosure, one or more of the following methods may be combined or operate independently without any combination.

The present disclosure proposes structures of multiple active times (hereinafter referred to as M-state active time) where different UE operations are configured and methods for operating the UE in consideration of the structures. Additionally, as one specific way of configuring and applying the M-state active time, a method for multiple DRX (hereinafter referred to as M-state DRX) configurations, where one or more DRX parameters may be configured in a single cell, is proposed.

**[Method 1] Configuration and Setting of M-active time**

Method 1 proposes a method where the UE operating in the DRX mode is configured with an M-state active time that have different operations and characteristics and performs DRX operations based on the M-state active time. To this end, the UE may receive configuration information on the M-state active time via higher layer signals (e.g., RRC signals) transmitted by the BS and apply the configuration information.

In this case, each active time included in the M-state active time may start and be maintained if configured start and maintain conditions are satisfied. For example, if the M-state active time is composed of two active times (first active time and second active time), the first active time may be determined based on first start and maintaining conditions, and the second active time may be determined based on second start and maintaining conditions. In this case, the start conditions may be configured to at least satisfy the conditions for the starting position of the on-duration timer configured for each active time, and additional conditions may be included. Additionally, the maintaining conditions may be configured to at least satisfy the maintaining conditions for both the on-duration timer and the inactivity timer configured for each active time, and additional conditions may be included. For example, when the first active time and second active time are configured and used, the starting position of the first active time may be based on the starting position of an on-duration timer associated with the first active time (first on-duration timer). The duration may be determined based on the termination of a first on-duration timer and a first inactivity timer. Additionally, the starting position of the second active time may be based on the starting position of an on-duration timer associated with the second active time (second on-duration timer). The duration may be determined based on the termination of a second on-duration timer and a second inactivity timer.

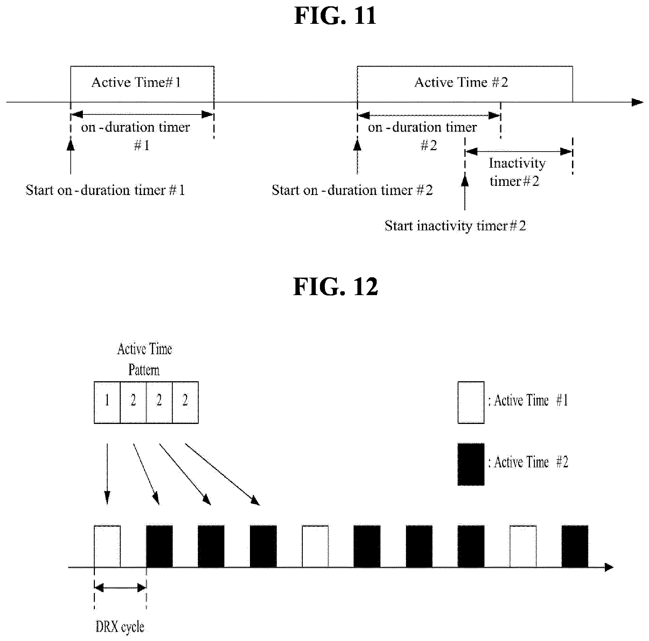

FIG. 11 is a diagram for explaining each active time duration in an M-state active time structure. In FIG. 11, the duration of a first active time is determined based on the start and end points of a first on-duration timer, and in this case, an inactivity timer does not operate. In the example of FIG. 11, a second active time is determined based on the start and end points of a second on-duration timer and a second inactivity timer. The example in FIG. 11 is just one example used for explanation, and the scope of application of the methods proposed in the present disclosure is not limited by FIG. 11.

Configuration of M-state active time in single DRX configuration

When a single DRX configuration and M-state active time are configured based on a single cell or a single DRX group, multiple active times included in the M-state active time may be applied periodically based on preconfigured or indicated pattern information with a DRX cycle. This implies that, as one of the additional start conditions for the active time, information on an occurrence pattern for the active time may be used. For example, when the M-state active time is composed of two active times (first active time and second active time), the BS may provide the UE with pattern information (e.g., a bitmap) showing the occurrence order of the first active time and second active time. The BS and UE may be configured to expect that the pattern will be applied based on the start position of an on-duration timer occurring periodically with the DRX cycle and that the active time will be selected.

FIG. 12 illustrates the configuration of an M-state active time in a single DRX configuration. In FIG. 12, the type of active time that occurs periodically with a DRX cycle is determined based on pattern information provided by the BS to the UE, and a configured pattern is repeatedly applied. The example in FIG. 12 is just one example used for explanation, and the scope of application of the methods proposed in the present disclosure is not limited by FIG. 12.

Configuration of M-state active time in M-state DRX configuration

When an M-state DRX configuration and an M-state active time are configured, different states of active times may be applied to each DRX configuration (or allowed to be applied). For a single DRX configuration, if an active time of one state is applied, the proposed start conditions for the active time may be configured to follow the start conditions of an on-duration timer configured for each DRX configuration. Additionally, the maintaining conditions for the active time may be configured to follow the maintaining conditions of the on-duration timer and an inactivity timer configured for each DRX configuration. For example, when the M-state DRX configuration is composed of two DRX configurations (first DRX and second DRX), and a first active time is configured for first DRX, the first active time may occur periodically based on a first DRX cycle. When a second active time is configured for second DRX, the second active time may occur periodically based on a second DRX cycle.

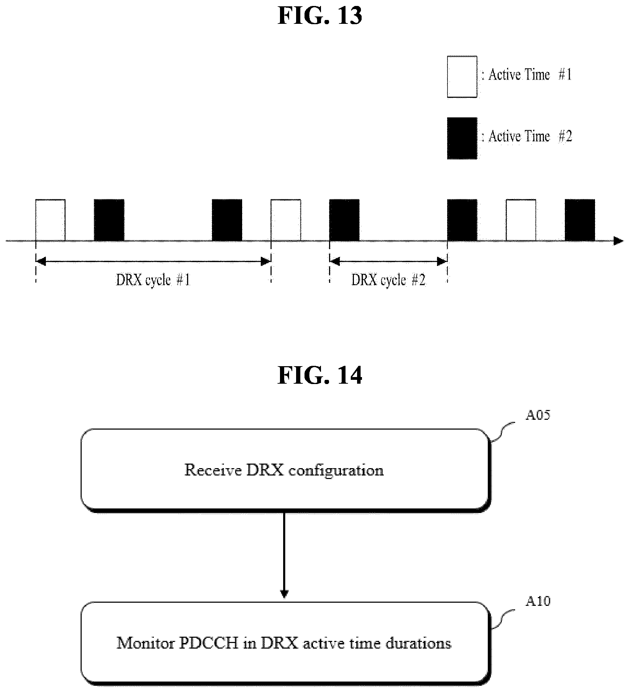

FIG. 13 illustrates the configuration of an M-state active time in an M-state DRX configuration. In FIG. 13, the first active time occurs periodically based on the first DRX cycle specified by a first DRX configuration, while the second active time occurs periodically based on the second DRX cycle specified by a second DRX configuration. The example in FIG. 13 is just one example used for explanation, and the scope of application of the methods proposed in the present disclosure is not limited by the example in FIG. 13.

**[Method 2] Operation and Characteristics of M-Active Time**

Method 2 proposes a method for distinguishing information configured for each active time and UE operations when the UE operating in the DRX mode is configured with an M-state active time with different operations and characteristics and performs DRX operations based on the M-state active time. To this end, the UE may receive configuration information on the M-state active time via higher layer signals (e.g., RRC signals) transmitted by the BS and use the information to acquire and apply information on expected operations for active times of each state.

Individual configurations of operations for active times of each state

Specifically, each active time included in an M-state active time may be configured/assumed with individual operation modes through one or more combinations of the following options. The examples described in the following options are just one specific example where the present disclosure is applicable. It should be understood by those skilled in the art that the principles proposed in the present disclosure are not limited to these examples.

Option 2-A-1) A PDCCH reception method of the UE may be configured differently for each active time included in the M-state active time. In this case, the PDCCH reception method of the UE may include search space candidates to be monitored by the UE, DCI formats, and/or the types of RNTI used for DCI decoding. As one example of applying the proposed methods, when the M-state active time is composed of two active times (first active time and second active time). In the first active time, the UE may be configured to receive a PDCCH using all search spaces, DCI formats, and RNTIs that the UE may expect during the active time. In the second active time, only a subset of the search spaces, DCI formats, and RNTIs that may be expected during the first active time may be allowed for PDCCH reception. As another example of applying the proposed method, configuration information on PDCCH reception may be provided individually for the first active time and second active time.

Option 2-A-2) Each active time included in the M-state active time may be configured with different CSI report operations. In this case, the configuration of the CSI report operation may include a CSI mask, which is an RRC parameter that determines whether the CSI report operation of the UE is allowed only during the on-duration timer. For example, when the M-state active time is composed of two active times (first active time and second active time), configuration information on the first and second active times may individually include indication information on a CSI mask applied to each active time. Additionally, the configuration of the CSI report operation may include whether the CSI report is performed. For example, when the M-state active time is composed of two active times (first active time and second active time), the CSI report may be supported during the first active time, and the operation details may be configured based on the CSI mask. In contrast, the CSI report may not be performed during the second active time, or the execution of the CSI report may be determined by configuration information (e.g., RRC signaling).

Option 2-A-3) Each active time included in the M-state active time may be configured with different search space set group related (SSSG-related) operations. In this case, the SSSG-related operation may be the configuration of a default SSSG applied at the starting point of the active time. The default SSSG refers to an SSSG that is applied when each active time begins, which may be determined by the standard or configured by the BS and provided to the UE (e.g., via RRC signaling). For example, when the M-state active time is composed of two active times (first active time and second active time), a default SSSG applied at the start of the first active time and a default SSSG applied at the start of the second active time may be set differently. Alternatively, the SSSG-related operation may be configured for a target SSSG that may be configured/indicated/applied for each active time. For example, when the M-state active time is composed of two active times (first active time and second active time), candidate SSSGs that may be applied in the first active time and candidate SSSGs that may be applied in the second active time may be the same or different, which may be configured by the BS and provided to the UE (e.g., via RRC signaling).

Option 2-A-4) Each active time included in the M-state active time may be configured with different PDCCH skipping-related operations. In this case, the PDCCH skipping-related operation may include whether instructed PDCCH skipping is maintained. Specifically, the PDCCH skipping-related operation may include whether PDCCH skipping instructed in one active time is applied/maintained in the duration of another active time. For example, when the M-state active time is composed of two active times (first active time and second active time), the PDCCH skipping operation instructed in each active time may be configured such that the operation is not applied in the duration of another active time, or conversely, configured to be applied in the duration. To this end, an operation defined by the standard may be applied, or configuration information may be configured by the BS and provided to the UE (e.g., via RRC signaling). In another example, when the M-state active time is composed of two active times (first active time and second active time), the PDCCH skipping operation instructed in the first active time may be allowed to be applied in the duration of the second active time. However, conversely, the PDCCH skipping operation instructed in the second active time may be configured not to be applied in the duration of the first active time. As another possible PDCCH skipping-related operation, the length of a skipping duration for PDCCH skipping may be included. For example, when the M-state active time is composed of two active times (first active time and second active time), the duration for which the PDCCH skipping instructed in the first active time is maintained and the duration for which the PDCCH skipping instructed in the second active time is maintained may be configured to be different from each other.

Option 2-A-5) The configuration and information of a DCI field indicating PDCCH monitoring adaptation may be applied differently depending on each active time included in the M-state active time. In this case, the PDCCH monitoring adaptation operation may include an SSSG switching operation and/or a PDCCH skipping operation. The DCI indicating the PDCCH monitoring adaptation may include scheduling DCI monitored by the UE within the active time. Even when different DCI is used, if the PDCCH monitoring adaptation operation is included, the methods proposed in the present disclosure may be applied. For example, when the M-state active time is composed of two active times (first active time and second active time). A combination of PDCCH monitoring adaptation operations that may be instructed in the first active time (e.g., SSSG index and/or PDCCH skipping duration, etc.) and a combination of PDCCH monitoring adaptation operations that may be instructed in the second active time may be configured differently. In this case, if the same DCI format and RNTI are used, the size of a field indicating the PDCCH monitoring adaptation may be configured to be the same.

Option 2-A-6) Information indicated by a WUS may be applied differently depending on each active time included in the M-state active time. In this case, the information indicated by the WUS may include an active time corresponding to the target of a wake-up, and the relationship between the target active time and the WUS may be defined by the standard or configured by the BS and provided to the UE (e.g., via RRC signaling). For example, when the M-state active time is composed of two active times (first active time and second active time), whether the wake-up is performed in the first active time may be indicated by a WUS (first WUS) configured based on the first active time, and whether the wake-up is performed in the second active time may be indicated by a WUS (second WUS) configured based on the second active time. Additionally, the information indicated by the WUS may include a default operation that the UE performs when the UE does not receive the WUS (e.g., go-to-wake-up or go-to-sleep). To this end, the configuration for each active time may be provided independently and applied. As another piece of information that may be indicated by the WUS, the configuration of the WUS may be configured to be determined differently for each active time. For example, when the M-state active time is composed of two active times (first active time and second active time), for the first active time, the duration of a WUS monitoring window may be configured based on the position of the first active time. However, for the second active time, the location of the WUS may not be configured. In this case, the WUS may provide wake-up indication information for the first active time, and at the same time, (1) the second active time may be configured to always start regardless of the WUS, or (2) the relationship between the WUS and one or more second active times may be determined, and the related second active times may also be configured to be influenced by the operation indication from the WUS. When the WUS, which is configured based on the position of the first active time, provides operation indication information for the second active time, the operation indication information may be the same as the information applied to the first active time, or a separate field for each active time may be configured within WUS DCI (e.g., DCI format 2_6) such that the information is differentiated.

Option 2-A-7) Each active time included in the M-state active time may be configured with different DRX parameters. In this case, the remaining DRX parameters may use shared values among the active times included in the M-state active time. The DRX parameters that may be configured differently may include the sizes or configurations of timer values that may be used to determine the start/maintaining conditions of the active time. The differently configurable DRX parameters may include the sizes or configurations of timer values capable of being used to determine the start/maintaining conditions of the active time. For example, when the M-state active time is composed of two active times (first active time and second active time), on-duration timers and/or inactivity timers configured for the first active time and second active time may have different lengths. In another example, when the M-state active time is composed of two active times (first active time and second active time), where the length of the inactivity timer may be configured and applied to the first active time, but the inactivity timer may not be configured/applied to the second active time. The method in this option may be advantageous in allowing control of different DRX parameters in a scenario where a single DRX configuration is applied.

Option 2-A-8) Each active time included in the M-state active time may be configured to be applied to different cells. Specifically, some active times within the M-state active time may be applied commonly to cells included in a DRX group, while other active times may be applied only to specific pre-designated cells, regardless of the DRX group. For example, when multiple carriers are configured for the UE, and the M-state active time is composed of two active times (first active time and second active time), the first active time may be configured to be applied commonly to all cells included in the DRX group, while the second active time may be configured to operate only on a specific cell. In this case, the specific cell may be a PCell or one of other SCells defined by the configuration of the BS. As another specific method, when the DRX group has a hierarchical structure, where one DRX group contains cells of another DRX group in the form of a sub DRX group, some active times within the M-state active time may be applied only to the sub DRX group, while the active times may not be applied to other cells.

UE operations in overlapping portions of different active times.

Due to the impacts of an inactivity timer, the maintenance duration of an active time that starts at an earlier position may overlap with the maintenance duration of a next active time. As described above, when the UE operations configured/applied/indicated for each active time differ from each other, ambiguity in the UE operations may occur due to such overlaps. Accordingly, the present disclosure proposes methods to resolve the issue. Specifically, one of the following options may be selected and used.

Option 2-B-1) When active times of different states overlap, the UE may determine operations to perform based on the priorities of the active times. For example, when the M-state active time is composed of two active times (first active time and second active time), and when the first active time has a higher priority than the second active time, the operations of the UE at a position where the first and second active times overlap may be determined based on the first active time.

Option 2-B-2) When active times of different states overlap, the UE may determine to perform an operation of performing all operations performed in the individual active times. However, if the UE is unable to perform all operations due to limitations such as UE complexity, the UE determines an operation to be applied based on the priority defined for each operation. For example, when the M-state active time is composed of two active times (first active time and second active time), the UE may perform all the operations that need to be performed in both the first and second active times. If the UE needs to select specific operation(s), the UE may determine operations by applying the priority for each operation.

The criteria for selecting the above options may vary depending on the operations performed within the active time. For example, Option 2-B-1 may be applied to operations such as CSI reporting or PDCCH monitoring adaptation, while Option 2-B-2 may be applied to PDCCH reception.

Dynamic indication of active time states

As one method for determining the state of an active time, the active time may be determined based on a dynamic indication transmitted by the BS and received by the UE. For example, the dynamic indication may be provided through information generated by the BS and transmitted via a MAC CE or DCI.

As one operation for the UE to receive the dynamic indication, the UE maintaining the current active time state may be configured to transition to another state. For example, the dynamic indication may be transmitted over a PDCCH or PDSCH that is transmitted and received within the active time. Upon receiving the dynamic indication, the UE may be configured to change the active time state after a specified application delay ($\geq$0) from a reference point (e.g., a time when the dynamic indication is received through the PDCCH/PDSCH or a time when feedback for the PDSCH is transmitted). If the number of states of the active times included in the M-state active time exceeds two, the state of the active time that is changed by the dynamic indication may be determined according to the standard or pre-configured information (e.g., RRC signaling). Alternatively, when the dynamic indication is provided, information on the active time to be changed (e.g., index) may also be provided together. For example, when the M-state active time is composed of two active times (first active time and second active time), and when an indication to change the state of the active time is provided through a bit field included in specific DCI, the bit field may indicate the transition to the first active time or second active time (or indicate the continuation or change of the currently maintained active time). When the UE receives the DCI and is instructed to change the state of the active time, the UE may expect that the changed active time will be applied after the application delay. In this case, the application delay refers to the time required for the UE to receive information and reflect the information. The application delay may be defined by the standard or configured and provided by the BS, and applied by the UE.

Alternatively, if the UE receives the dynamic indication outside of the active time, the UE may use the dynamic indication to determine another active time to be applied at the start position of the active time associated with the dynamic indication. For example, the dynamic indication may be transmitted through a WUS, which may be transmitted outside of the active time. In this case, the indication of the state of the active time provided by the WUS may be applied to active time(s) where the wake-up status is controlled by the WUS. For example, when the M-state active time is composed of two active times (first active time and second active time), and when an indication to change the state of the active time is provided by a bit field included in the WUS, each WUS may be configured to determine the state of the active time applied at the start position of an on-duration timer, where the wake-up status is provided by the WUS. If a default operation when the UE is unable to monitor the WUS is set to the wake-up, the UE may be configured to apply the active time set by default at the start position of the on-duration timer.

FIG. 14 is a diagram illustrating signal reception by a UE according to an embodiment.

Referring to FIG. 14, the UE may receive at least one DRX configuration from a network (A05).

The UE may perform PDCCH monitoring based on a plurality of DRX active time durations related to the at least one DRX configuration (A10).

The plurality of DRX active time durations may include at least one first type DRX active time duration and at least one second type DRX active time duration,

The PDCCH monitoring may include: (i) first PDCCH monitoring performed based on a first PDCCH monitoring-related configuration during the at least one first type DRX active time duration; and (ii) second PDCCH monitoring performed based on a second PDCCH monitoring-related configuration during the at least one second type DRX active time duration.

The first PDCCH monitoring-related configuration and the second PDCCH monitoring-related configuration may be at least partially different.

The first PDCCH monitoring-related configuration may be associated with a first search space set (SSS), and the second PDCCH monitoring-related configuration may be associated with a second SSS.

The first SSS and the second SSS may belong to different SSSGs.

At least one of a DCI format configuration and an RNTI configuration may be different between the first PDCCH monitoring-related configuration and the second PDCCH monitoring-related configuration.

A PDCCH skipping operation for omitting monitoring of at least a part of PDCCH candidates related to the PDCCH monitoring may be configured differently between the first PDCCH monitoring-related configuration and the second PDCCH monitoring-related configuration.

The at least one first type DRX active time duration may be configured based on a first periodicity, and the at least one second type DRX active time duration may be configured based on a second periodicity.

During a time duration in which the at least one first type DRX active time duration and the at least one second type DRX active time duration overlap, the first PDCCH monitoring may be performed based on the first PDCCH monitoring-related configuration.

The at least one first type DRX active time duration and the at least one second type DRX active time duration may be configured based on a single DRX configuration.

The single DRX configuration may include information regarding a pattern of the at least one first type DRX active time duration and the at least one second type DRX active time duration in a time domain.

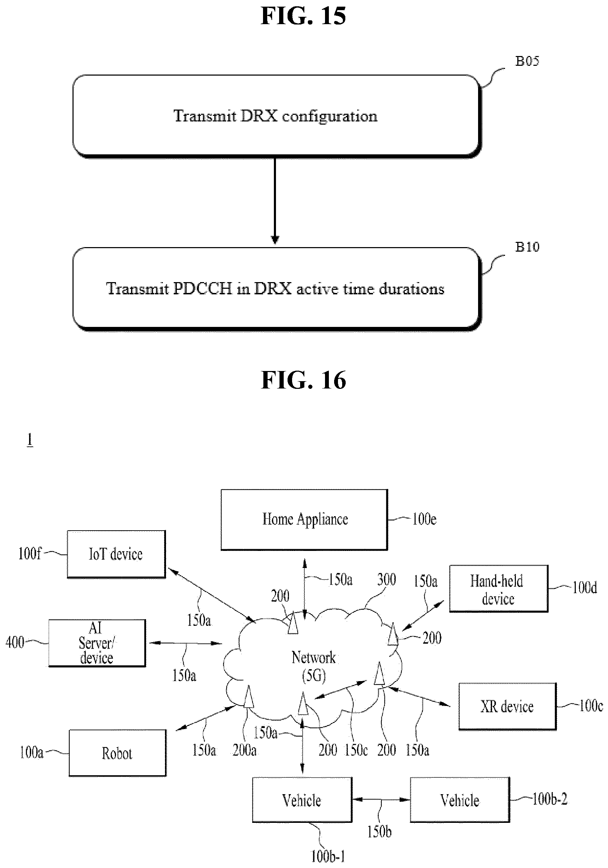

FIG. 15 is a diagram illustrating signal transmission by a BS according to an embodiment.

Referring to FIG. 15, the BS may transmit at least one DRX configuration to a UE (B05).

The BS may perform PDCCH transmission to the UE based on a plurality of DRX active time durations related to the at least one DRX configuration (B10).

The plurality of DRX active time durations may include at least one first type DRX active time duration and at least one second type DRX active time duration.

The PDCCH transmission may include: (i) first PDCCH transmission performed based on a first PDCCH monitoring-related configuration of the UE during the at least one first type DRX active time duration; and (ii) second PDCCH transmission performed based on a second PDCCH monitoring-related configuration during the at least one second type DRX active time duration.

The first PDCCH monitoring-related configuration and the second PDCCH monitoring-related configuration may be at least partially different.

The first PDCCH monitoring-related configuration may be associated with a first SSS, and the second PDCCH monitoring-related configuration may be associated with a second SSS.

The first SSS and the second SSS may belong to different SSSGs.

At least one of a DCI format configuration and an RNTI configuration may be different between the first PDCCH monitoring-related configuration and the second PDCCH monitoring-related configuration.

A PDCCH skipping operation for omitting monitoring of at least a part of PDCCH candidates related to the PDCCH monitoring may be configured differently between the first PDCCH monitoring-related configuration and the second PDCCH monitoring-related configuration.

The at least one first type DRX active time duration may be configured based on a first periodicity, and the at least one second type DRX active time duration may be configured based on a second periodicity.

During a time duration in which the at least one first type DRX active time duration and the at least one second type DRX active time duration overlap, the first PDCCH transmission may be performed based on the first PDCCH monitoring-related configuration.

The at least one first type DRX active time duration and the at least one second type DRX active time duration may be configured based on a single DRX configuration.

The single DRX configuration may include information regarding a pattern of the at least one first type DRX active time duration and the at least one second type DRX active time duration in a time domain.

FIG. 16 illustrates a communication system 1 applied to the present disclosure.

Referring to FIG. 16, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

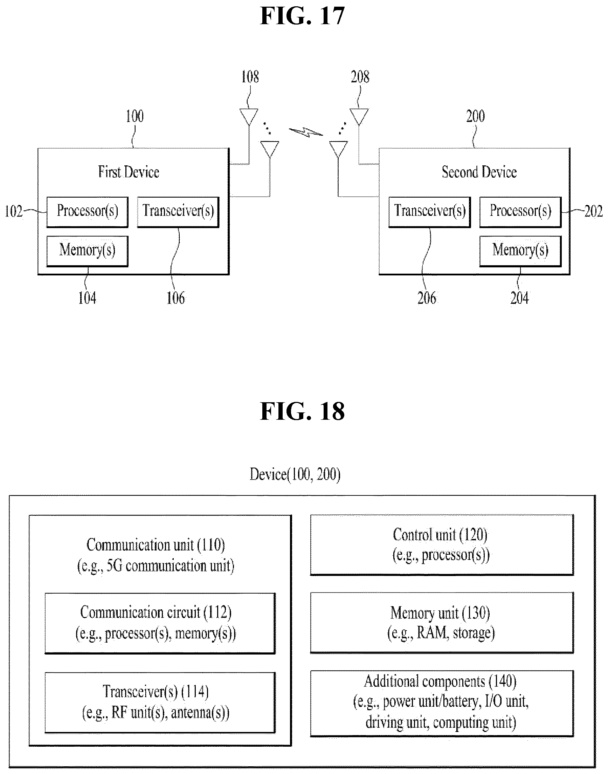

FIG. 17 illustrates wireless devices applicable to the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In an embodiment of the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In an embodiment of the present disclosure, the wireless device may represent a communication modem/circuit/chip.

Hereinafter, hardware elements of the wireless devices 100 and 200 may be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 18 illustrates another example of a wireless device applied to the present disclosure. The wireless device may be implemented in various forms according to a use-case/service (refer to FIG. 16).

Referring to FIG. 18, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 18, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

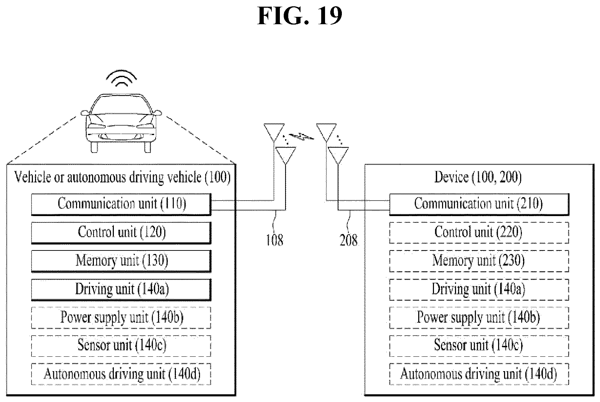

FIG. 19 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 19, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 18, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

The above-described embodiments correspond to combinations of elements and features of the present disclosure in prescribed forms. And, the respective elements or features may be considered as selective unless they are explicitly mentioned. Each of the elements or features may be implemented in a form failing to be combined with other elements or features. Moreover, it is able to implement an embodiment of the present disclosure by combining elements and/or features together in part. A sequence of operations explained for each embodiment of the present disclosure may be modified. Some configurations or features of one embodiment may be included in another embodiment or may be substituted for corresponding configurations or features of another embodiment. And, an embodiment may be configured by combining claims failing to have relation of explicit citation in the appended claims together or may be included as new claims by amendment after filing an application.

Those skilled in the art may appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The present disclosure is applicable to UEs, BSs, or other apparatuses in a wireless mobile communication system.

**Claims**

1. A method of receiving a signal by a user equipment (UE) in a wireless communication system, the method comprising:

    receiving at least one discontinuous reception (DRX) configuration from a network; and

performing physical downlink control channel (PDCCH) monitoring based on a plurality of DRX active time durations related to the at least one DRX configuration,

wherein the plurality of DRX active time durations comprise at least one first type DRX active time duration and at least one second type DRX active time duration,

wherein the PDCCH monitoring comprises (i) first PDCCH monitoring performed based on a first PDCCH monitoring-related configuration during the at least one first type DRX active time duration, and (ii) second PDCCH monitoring performed based on a second PDCCH monitoring-related configuration during the at least one second type DRX active time duration, and

wherein the first PDCCH monitoring-related configuration and the second PDCCH monitoring-related configuration are at least partially different.

2. The method of claim 1, wherein the first PDCCH monitoring-related configuration is associated with a first search space set (SSS), and
wherein the second PDCCH monitoring-related configuration is associated with a second SSS.

3. The method of claim 2, wherein the first SSS and the second SSS belong to different search space set groups (SSSGs).

4. The method of claim 1, wherein at least one of a downlink control information (DCI) format configuration and a radio network temporary identifier (RNTI) configuration is different between the first PDCCH monitoring-related configuration and the second PDCCH monitoring-related configuration.

5. The method of claim 1, wherein a PDCCH skipping operation for omitting monitoring of at least a part of PDCCH candidates related to the PDCCH monitoring is configured differently between the first PDCCH monitoring-related configuration and the second PDCCH monitoring-related configuration.

6. The method of claim 1, wherein the at least one first type DRX active time duration is configured based on a first periodicity, and
wherein the at least one second type DRX active time duration is configured based on a second periodicity.

7. The method of claim 6, wherein during a time duration in which the at least one first type DRX active time duration and the at least one second type DRX active time duration overlap, the first PDCCH monitoring is performed based on the first PDCCH monitoring-related configuration.

8. The method of claim 1, wherein the at least one first type DRX active time duration and the at least one second type DRX active time duration are configured based on a single DRX configuration.

9. The method of claim 8, wherein the single DRX configuration comprises information regarding a pattern of the at least one first type DRX active time duration and the at least one second type DRX active time duration in a time domain.

10. A computer-readable recording medium having recorded thereon a program for executing the method of claim 1.

11. A device for wireless communication, the device comprising:

a memory configured to store instructions; and
a processor configured to perform operations by executing the instructions,
wherein the operations of the processor comprise:

receiving at least one discontinuous reception (DRX) configuration from a network; and
performing physical downlink control channel (PDCCH) monitoring based on a plurality of DRX active time durations related to the at least one DRX configuration,
wherein the plurality of DRX active time durations comprise at least one first type DRX active time duration and at least one second type DRX active time duration,
wherein the PDCCH monitoring comprises (i) first PDCCH monitoring performed based on a first PDCCH monitoring-related configuration during the at least one first type DRX active time duration and (ii) second PDCCH monitoring performed based on a second PDCCH monitoring-related configuration during the at least one second type DRX active time duration, and
wherein the first PDCCH monitoring-related configuration and the second PDCCH monitoring-related configuration are at least partially different.

12. The device of claim 11, further comprising a transceiver configured to transmit or receive wireless signals under control of the processor, wherein the device is a user equipment (UE) operating in a wireless communication system.

13. The device of claim 11, wherein the device is a processing device configured to control a user equipment (UE) operating in a wireless communication system.

14. A method of transmitting a signal by a base station (BS) in a wireless communication system, the method comprising:

transmitting at least one discontinuous reception (DRX) configuration to a user equipment (UE); and
performing physical downlink control channel (PDCCH) transmission to the UE based on a plurality of DRX active time durations related to the at least one DRX configuration,
wherein the plurality of DRX active time durations comprise at least one first type DRX active time duration and at least one second type DRX active time duration,
wherein the PDCCH transmission comprises (i) first PDCCH transmission performed based on a first PDCCH monitoring-related configuration of the UE during the at least one first type DRX active time duration and (ii) second PDCCH transmission performed based on a second PDCCH monitoring-related configuration during the at least one second type DRX active time duration, and
wherein the first PDCCH monitoring-related configuration and the second PDCCH monitoring-related configuration are at least partially different.

15. A base station (BS) for wireless communication, the BS comprising:

a memory configured to store instructions; and
a processor configured to perform operations by executing the instructions,
wherein the operations of the processor comprise:

transmitting at least one discontinuous reception (DRX) configuration to a user equipment (UE); and
performing physical downlink control channel (PDCCH) transmission to the UE based on a plurality of DRX active time durations related to the at least one DRX configuration,
wherein the plurality of DRX active time durations comprise at least one first type DRX active time duration and at least one second type DRX active time duration,
wherein the PDCCH transmission comprises (i) first PDCCH transmission performed based on a first PDCCH monitoring-related configuration of the UE during the at least one first type DRX active time duration and (ii) second PDCCH transmission performed based on a second PDCCH monitoring-related configuration during the at least one second type DRX active time duration, and
wherein the first PDCCH monitoring-related configuration and the second PDCCH monitoring-related configuration are at least partially different.

# FIG. 1

Initial Cell Search — S11: PSS/SSS & [DLRS] & PBCH

System Information Reception — S12: PDCCH/PDSCH (BCCH)

Random Access Procedure — S13: PRACH, S14: PDCCH/PDSCH, S15: PRACH, S16: PDCCH/PDSCH

General DL/UL Tx/Rx — S18, S17: PDCCH/PDSCH, PUSCH/PUCCH

- DL/UL ACK/NACK
- UE CQI/PMI/Rank Report using PUSCH and PUCCH

# FIG. 2

One Frame (10ms)

Half-Frame (5ms) | Half-Frame (5ms)

Subframe 0 (1ms) ... Subframe 4 (1ms) | Subframe 5 (1ms) ... Subframe 9 (1ms)

Subframe (1ms)

15KHz — Slot (14 symbols) — 1ms

30KHz — Slot 0 (14 symbols) | Slot 1 — 500us

60KHz — Slot 0 (14 symbols) | Slot 1 | Slot 2 | Slot 3 — 250us

120KHz — Slot 0 (14 symbols) | Slot 1 | Slot 2 | Slot 3 | Slot 4 | Slot 5 | Slot 6 | Slot 7 — 125us

# FIG. 3

Resource grid

A carrier
(up to 3300 subcarriers, i.e., 275 RBs)

A BWP

1 RB = 12 subcarriers

1 RE

1 subcarrier

1 symbol

# FIG. 4

# FIG. 5

# FIG. 6

DL assingment-to-PDSCH offset (K0)

PDCCH

slot

PDSCH

PUCCH

PDSCH-to-HARQ-ACK reporting offset (K1)

# FIG. 7

UL grant-to-PUSCH offset (K2)

PDCCH

PUSCH

# FIG. 8

UE shall monitor PDCCH

On Duration    Opportunity for DRX

DRX Cycle

# FIG. 9

# FIG. 10

EP 4 598 260 A1

# FIG. 11

# FIG. 12

# FIG. 13

☐ : Active Time #1

■ : Active Time #2

DRX cycle #1

DRX cycle #2

# FIG. 14

Receive DRX configuration — A05

Monitor PDCCH in DRX active time durations — A10

# FIG. 15

Transmit DRX configuration — B05

Transmit PDCCH in DRX active time durations — B10

# FIG. 16

1

## FIG. 17

## FIG. 18

Device(100, 200)

EP 4 598 260 A1

# FIG. 19

| Vehicle or autonomous driving vehicle (100) |
|---|
| Communication unit (110) |
| Control unit (120) |
| Memory unit (130) |
| Driving unit (140a) |
| Power supply unit (140b) |
| Sensor unit (140c) |
| Autonomous driving unit (140d) |

108  208

| Device (100, 200) |
|---|
| Communication unit (210) |
| Control unit (220) |
| Memory unit (230) |
| Driving unit (140a) |
| Power supply unit (140b) |
| Sensor unit (140c) |
| Autonomous driving unit (140d) |

## INTERNATIONAL SEARCH REPORT

| International application No. |
| --- |
| **PCT/KR2023/014238** |

### A. CLASSIFICATION OF SUBJECT MATTER

**H04W 76/28**(2018.01)i; **H04W 52/02**(2009.01)i; **H04W 72/23**(2023.01)i; **H04J 11/00**(2006.01)i; **H04W 72/04**(2009.01)i

According to International Patent Classification (IPC) or to both national classification and IPC

### B. FIELDS SEARCHED

Minimum documentation searched (classification system followed by classification symbols)

H04W 76/28(2018.01); H04W 52/02(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: DRX(discontinuous reception) 설정 정보(configuration information), DRX active time 구간(period), PDCCH 모니터링(monitoring)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2021-0138762 A (CONVIDA WIRELESS, LLC) 19 November 2021 (2021-11-19) <br> See paragraphs [0071] and [0167]; claim 19; and figure 1f. | 1-15 |
| Y | US 2022-0295401 A1 (SAMSUNG ELECTRONICS CO., LTD.) 15 September 2022 (2022-09-15) <br> See paragraphs [0064] and [0100]. | 1-15 |
| A | WO 2021-010747 A1 (LG ELECTRONICS INC.) 21 January 2021 (2021-01-21) <br> See paragraphs [0340]-[0343]; and figure 34. | 1-15 |
| A | KR 10-2021-0007285 A (SAMSUNG ELECTRONICS CO., LTD.) 20 January 2021 (2021-01-20) <br> See paragraphs [0028]-[0054]; and figure 1c. | 1-15 |
| A | KR 10-2020-0011433 A (GUANGDONG OPPO MOBILE TELECOMMUNICATIONS CORP., LTD.) 03 February 2020 (2020-02-03) <br> See paragraphs [0051]-[0056]; and figure 3. | 1-15 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 January 2024** | **10 January 2024** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2023/014238**

| Patent document cited in search report | | | Publication date (day/month/year) | Patent family member(s) | | | Publication date (day/month/year) |
|---|---|---|---|---|---|---|---|
| KR | 10-2021-0138762 | A | 19 November 2021 | CN | 113647154 | A | 12 November 2021 |
| | | | | EP | 3949544 | A1 | 09 February 2022 |
| | | | | US | 2022-0191793 | A1 | 16 June 2022 |
| | | | | WO | 2020-198594 | A1 | 01 October 2020 |
| US | 2022-0295401 | A1 | 15 September 2022 | KR | 10-2023-0152047 | A | 02 November 2023 |
| | | | | WO | 2022-191644 | A1 | 15 September 2022 |
| WO | 2021-010747 | A1 | 21 January 2021 | US | 11425655 | B2 | 23 August 2022 |
| | | | | US | 2022-0124623 | A1 | 21 April 2022 |
| | | | | US | 2022-0353816 | A1 | 03 November 2022 |
| KR | 10-2021-0007285 | A | 20 January 2021 | None | | | |
| KR | 10-2020-0011433 | A | 03 February 2020 | AU | 2017-416127 | A1 | 02 January 2020 |
| | | | | BR | 112019025167 | A2 | 16 June 2020 |
| | | | | CA | 3065088 | A1 | 06 December 2018 |
| | | | | CN | 110637483 | A | 31 December 2019 |
| | | | | CN | 114143863 | A | 04 March 2022 |
| | | | | CN | 114143863 | B | 28 March 2023 |
| | | | | EP | 3627904 | A1 | 25 March 2020 |
| | | | | EP | 3627904 | A4 | 24 June 2020 |
| | | | | JP | 2020-526061 | A | 27 August 2020 |
| | | | | JP | 6961722 | B2 | 05 November 2021 |
| | | | | KR | 10-2367005 | B1 | 24 February 2022 |
| | | | | MX | 2019014387 | A | 23 January 2020 |
| | | | | RU | 2733807 | C1 | 07 October 2020 |
| | | | | SG | 11201911428 | XA | 30 January 2020 |
| | | | | TW | 201904315 | A | 16 January 2019 |
| | | | | US | 2020-0100184 | A1 | 26 March 2020 |
| | | | | WO | 2018-218683 | A1 | 06 December 2018 |
| | | | | ZA | 202000029 | B | 25 August 2021 |

Form PCT/ISA/210 (patent family annex) (July 2022)